# EUROPÄISCHE PATENTSCHRIFT

(11) **EP 2 081 266 B1**
(45) Veröffentlichungstag und Bekanntmachung des Hinweises auf die Patenterteilung: **20.07.2016**
(21) Anmeldenummer: 09150170.0
(22) Anmeldetag: 07.01.2009
(51) Int. Cl.: H02G 1/12

(54) **Messereinsatz**
Blade insert
Utilisation d'un couteau

(30) Priorität: 16.01.2008 DE 202008000596 U
(43) Veröffentlichungstag der Anmeldung: 22.07.2009
(73) Patentinhaber: Weidmüller Interface GmbH & Co. KG, 32758 Detmold (DE)
(72) Erfinder: Hanning, Günther, 32758, Detmold (DE); Heggemann, Christian, 32758, Detmold (DE); Hetland, Detlev, 32760, Detmold (DE); Köster, Thomas, 33189, Schlangen (DE); Wedler, Andreas, 32756, Detmold (DE); Storm, Siegfried, 33189, Schlangen (DE)
(74) Vertreter: Dantz, Jan Henning

(56) Entgegenhaltungen:
- DE-C1- 4 420 050
- FR-A- 2 429 654
- US-A- 3 596 541

## Beschreibung

Die vorliegende Erfindung betrifft einen Messereinsatz und eine Abisolierzange mit einem Messereinsatz.

Ein gattungsgemäßer Messereinsatz sowie eine damit ausgestattete gattungsgemäße Abisolierzange ist aus der US 6,910,401 bekannt. Die dort gezeigte und beschriebene Konstruktion hat sich in der Praxis durchaus bewährt. Die Schrift offenbart eine Abisolierzange mit einer Schneideeinheit, die zwei drehbar montierte Arme beinhaltet, welche gegeneinander federgespannt sind und an ihren beiden Enden Schneidelemente tragen, wobei die Schneideeinheit zwischen Klemmkrallen aufgenommen ist und sich mit diesen bewegt. Mit dieser Schneideeinheit verbunden ist eine Ziehstange und ein Klemm- und Ziehmechanismus. Die Verbindung zwischen den drehbar montierten Armen ist ein rohrförmiges Drehlager. Dadurch sind die beiden Arme zwar gegeneinander verschwenkbar, aber trotzdem fest miteinander als Einheit verbunden. In diesem Drehlager ist eine Nadel aufgenommen, die die Schneideeinheit mit der Ziehstange verbindet. Nachteilig bei dieser Bauweise ist, dass die Schneideeinheit nur komplett aus der Zange entnommen werden kann und der Ausbau der Schneideeinheit aufwändig ist, da zusätzlich die Nadel aus dem Drehlager entnommen werden muss. Zudem hat sich die Nadel als Befestigungsmittel für die Schneideeinheit an der Zugstange als wenig geeignet erwiesen, insbesondere wegen der Verbiegungsgefahr der Nadel nach längerem Gebrauch der Zange. Ist die Nadel auch nur leicht verbogen, wird ein Herausnehmen und Einsetzen der Nadel aus bzw. in das Drehlager stark erschwert.

Die DE 44 20050 offenbart eine als Messerhalter dienende Klemmbacke, welche den unteren Teil eines Zangenmauls bildet.

Der Erfindung liegt daher die Aufgabe zugrunde, einen Messereinsatz und eine Abisolierzange zu entwickeln, die für die Abisolierung von Kabeln bei unterschiedlichsten Isolierschichtdicken geeignet ist und ein einfaches Austauschen der Schneidmesser ermöglicht.

Diese Aufgabe wird durch einen Messereinsatz mit den Merkmalen des Anspruchs 1 sowie durch eine Abisolierzange mit den Merkmalen des Anspruchs 12 gelöst.

Durch die erfindungsgemäße Trennung von Messerhalter und Messerkassette wird ein leicht durchzuführendes Austauschen der Schneidmesser der Abisolierzange an unterschiedliche Anforderungen wie variierende Leiterquerschnitte oder zu entfernendes Isolierungsmaterial ermöglicht. Ein Ausbau des Messerhalters ist bei dieser Konstruktion nicht erforderlich.

Weitere vorteilhafte Ausbildungen der Erfindung sind in den Unteransprüchen gekennzeichnet.

Die Rastbefestigung der Messerkassetten an den Messerhaltern ist leicht zu bedienen und kostengünstig herstellbar.

Der Einsatz einer Schenkelfeder zur Verbindung der Messerhalter gewährleistet eine stabile und gleichmäßige Federkraft über den gesamten Öffnungswinkel der Feder.

Nachfolgend werden Ausführungsbeispiele anhand der beigefügten Zeichnungen beschrieben. Es zeigen:
- Fig. 1: eine perspektivische Ansicht des Kopfes einer Ausführungsform einer Abisolierzange mit zwei Messerhaltern, eingerasteteter Messerkassette und abgenommener oberer Klemmbacke,
- Fig. 2: eine perspektivische Ansicht des Kopfes einer Ausführungsform einer Abisolierzange mit zwei Messerhaltern, abgenommener oberer Messerkassette und abgenommener oberer Klemmbacke,
- Fig. 3: eine perspektivische Detailansicht der Messerhalter und Messerkassetten im eingerasteten Zustand,
- Fig. 4: eine perspektivische Detailansicht der Messerhalter mit abgenommenen Messerkassetten.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Zange. Diese Begriffe sind nicht einschränkend zu verstehen, d.h. in verschiedenen Arbeitsstellungen oder durch spiegelsymmetrische Auslegung oder dergleichen können sich diese Bezüge ändern.

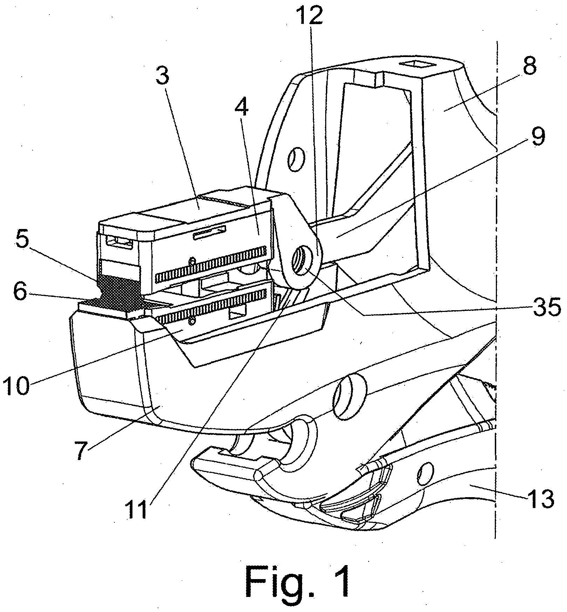

Figur 1 zeigt den Kopfteil einer bevorzugten Ausführungsform einer Abisolierzange 1. Diese verfügt über zwei Handhebel 13 (zu sehen ist in Fig. 1 nur der untere), eine Gehäuseschale 8 und eine relativ zu der Gehäuseschale 8 schwenkbare Klemmbacke (nicht gezeigt), die mit dem als Klemmbacke 7 ausgebildeten vorderen Teil der Gehäuseschale 8 ein Zangenmaul bildet, in dem ein Messereinsatz 2 gelagert ist. Dieser Messereinsatz besteht aus mindestens einem Messerhalter 3,16 und einem Abisoliermesser 5,15. In der in Figur 1 dargestellten besonderen Ausführungsform besteht der Messereinsatz 2 aus zwei Messerhaltern 3,16 mit je einem Abisoliermesser 5,15, dass in einer an dem Messerhalter abnehmbar befestigten Messerkassette 4,10 gelagert ist. Die abnehmbare Befestigung der Messerkassette an den Messerhalter erfolgt vorzugsweise durch eine Verrastung, auf die weiter unten detaillierter eingegangen wird.

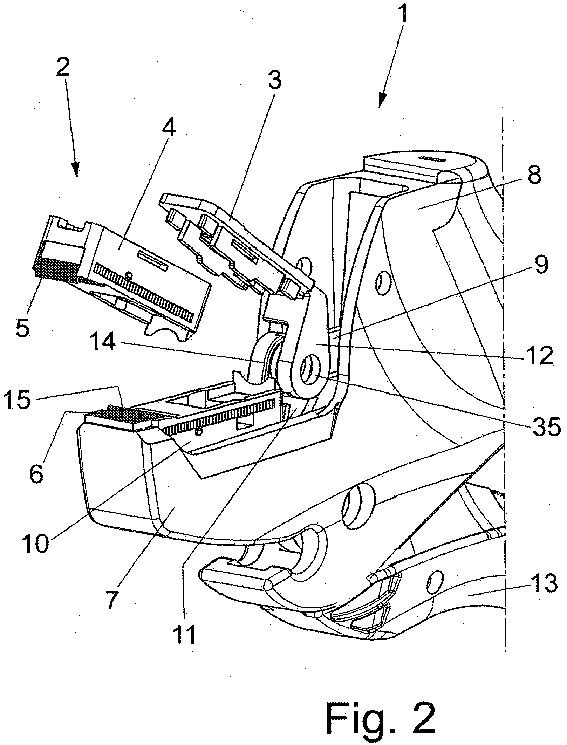

Figur 2 zeigt den in dem Abisolierwerkzeug 1 eingebauten Messereinsatz 2 im Montierzustand bei geöffnetem Zangenmaul und mit einer von dem oberen Messerhalter 3 losgelösten oberen Messerkassette 4.

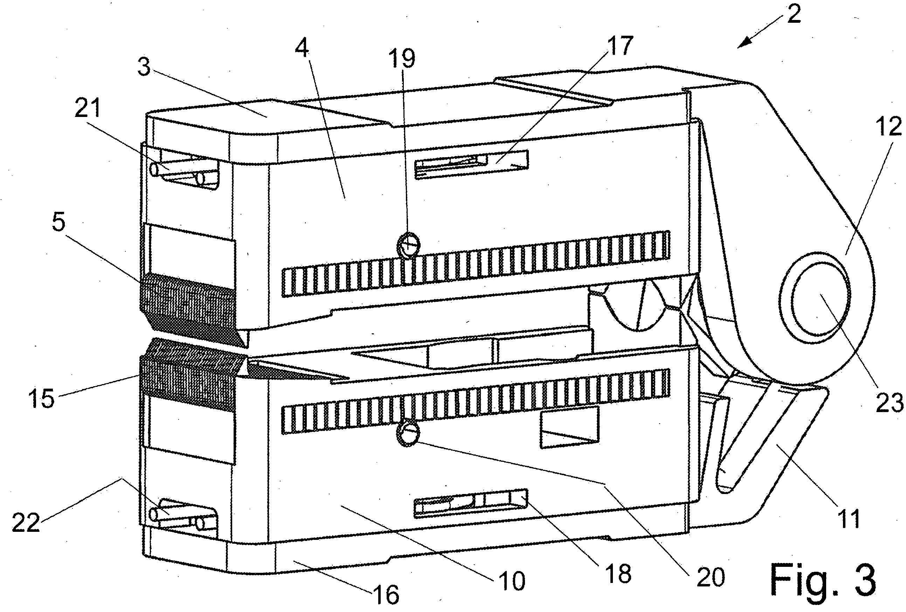

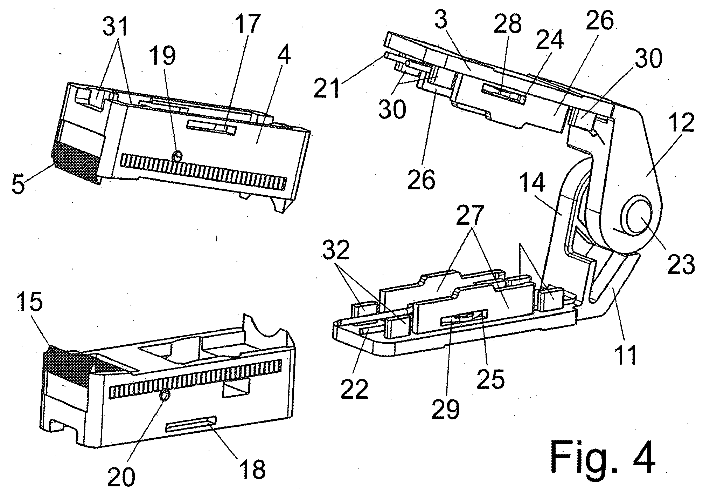

In Figur 3 ist am besten zu erkennen, dass die Abisoliermesser 5, 15 bevorzugt aus mehreren nebeneinander angeordneten Messerlamellen gebildet sind. Die einzelnen Messerlamellen eines Abisoliermessers sind über einen Stift 19, 20, der in den beiden Längsseitenflächen der Messerkassette senkrecht montiert ist, um die Stiftachse drehbar gelagert. Außerdem befindet sich an mindestens einer der Längsseiten der Messerkassette ein Rastelement 17, 18, dass, wie in Figur 4 zu erkennen ist, in ein Rastelement an der Längsseite des Messerhalters einrastbar ist. In der besonderen Ausführungsform, die in Figur 3 gezeigt ist, ist das Rastelement als Schlitz 17,18 ausgebildet, der mit einem Schlitz 24, 25 in einer Führungsseitenwand 26, 27 des Messerhalters 3, 16 korrespondiert und durch den eine Ausstülpung 28, 29 einer in der Messerkassette 4, 10 gelagerten Drahtfeder 21, 22 eingreift. Diese Drahtfeder 21, 22 ist u-förmig gebogen. Die Endstücke der Drahtfeder 21, 22 stehen wenige Millimeter aus einer Öffnung 33, 34 in einer der Stirnseiten der Messerkassette 4, 10 hervor, aus der auch die Schneiden der Messerlamellen 5, 15 austreten. Drückt man die Endstücke der Drahtfedern 21, 22 zusammen, treten die Ausstülpungen 28, 29 der Drahtfedern 21, 22 aus den Schlitzen 18, 19, 24, 25 zurück, aus denen sie zuvor heraus standen und lösen auf die Weise die Arretierung von Messerkassette 4, 10 und Messerhalter 3, 16. Alternativ ist das Rastelement an der Messerkassette 4, 10 als Rastnut und das Rastelement am Messerhalter als Raststeg ausgebildet oder das Rastelement an der Messerkassette 4, 10 ist als Raststeg und das Rastelement am Messerhalter als Rastnut ausgebildet.

In Figur 4 ist zu erkennen, dass die Messerhalter 3, 16 neben den Führungsseitenwänden 26, 27 mehrere Führungsstege 30, 32 aufweisen, die in Führungsnuten 31 in den Seitenwänden der Messerkassetten 4, 10 eingreifen, wenn die Messerkassetten 4, 10 an den Messerhaltern 3, 16 verrastet sind. Dadurch wird ein exakter Sitz der Messerkassetten 4, 10 in den Messerhaltern 3, 16 gewährleistet.

Die Messerhalter 3, 16 sind über einen Bolzen 23 drehbar an der Zugstange 9 gehaltert und werden bei der Benutzung der Abisolierzange parallel zur Zangenlängsachse in Richtung der Zangenhebel bewegt. Der Bolzen 23 ist dazu in Bohrungen 35 in dem der Zangenmitte zugewandten Ende der Messerhalter 2,13 und einer (nicht gezeigten) Bohrung in dem dem Zangenmaul zugewandten Ende der Zugstange 9 eingesteckt. Zwischen den Messerhaltern 3, 16 ist bevorzugt eine Feder 11 angeordnet. In einer besonderen Ausführungsform ist diese Feder 11 als Schenkelfeder 11 ausgebildet. In der in Figur 4 gezeigten bevorzugten Ausführungsform ist die Schenkelfeder 11 so angeordnet, dass sie mit dem unteren Messerhalter 16 fest verbunden ist und mit einem Schenkel gegen das mit der Zugstange 9 verbundene Ende des anderen Messerhalters 3 drückt. Dadurch werden die beiden Messerhalter im Ruhezustand stets auseinander gedrückt. Bei der Benutzung des Messereinsatzes, bevorzugt in einer Abisolierzange mit zwei Handhebeln, werden durch Zusammendrücken der beiden Handhebel die beiden Messerhalter 3, 16 entgegen der Federspannung der Schenkelfeder 11 zusammengedrückt. Läßt man nach erfolgtem Abisoliervorgang die Handhebel wieder los, so werden durch die Federspannung der Schenkelfeder 11 auch die Messerhalter und mit diesen das gesamte Zangenmaul wieder auseinander gedrückt.

### Bezugszeichenliste

- 1: Abisolierzange
- 2: Messereinsatz
- 3: Messerhalter
- 4: Messerkassette
- 5: Abisoliermesser
- 6: Klemmbackeneinsatz
- 7: Klemmbacke
- 8: Gehäuseschale
- 9: Zugstange
- 10: Messerkassette
- 11: Schenkelfeder
- 12: Halterung
- 13: Handhebel
- 14: Halterung
- 15: Abisoliermesser
- 16: Messerhalter
- 17: Schlitz
- 18: Schlitz
- 19: Stift
- 20: Stift
- 21: Drahtfeder
- 22: Drahtfeder
- 23: Bolzen
- 24: Schlitz
- 25: Schlitz
- 26: Führungsseitenwand
- 27: Führungsseitenwand
- 28: Ausstülpung
- 29: Ausstülpung
- 30: Führungssteg
- 31: Führungsnut
- 32: Führungssteg
- 33: Öffnung
- 34: Öffnung
- 35: Bohrung

## Patentansprüche

1. Messereinsatz eines Abisolierwerkzeuges, aufweisend mindestens einen in einem Zangenmaul des Abisolierwerkzeuges gelagerten Messerhalter (3, 16) und ein Abisoliermesser (5, 15), wobei der Messerhalter (3, 16) von einer Zugstange (9) beweglich gehaltert ist, wobei der Messereinsätz (2) mindestens eine an dem Messerhalter (3, 16) abnehmbar befestigte Messerkassette (4, 10) aufweist, in der das Abisoliermesser (5, 15) gelagert ist.

2. Messereinsatz nach Anspruch 1, **dadurch gekennzeichnet, dass** die Messerkassette (4, 10) an dem Messerhalter (3, 16) abnehmbar verrastet ist.

3. Messereinsatz nach Anspruch 1 oder 2, **dadurch gekennzeichnet, dass** der Messereinsatz (2) zwei relativ zueinander bewegliche Messerhalter (3, 16) mit je einer daran abnehmbar verrasteten Messerkassette (4, 10) aufweist.

4. Messereinsatz nach einem der vorstehenden Ansprüche, **dadurch gekennzeichnet, dass** mindestens eines der Abisoliermesser (5, 15) aus mehreren nebeneinander angeordneten Messerlamellen gebildet ist.

5. Messereinsatz nach einem der vorstehenden Ansprüche, **dadurch gekennzeichnet, dass** mindestens eine der Längsseiten der Messerkassette (4, 10) mit mindestens einem Rastelement ausgebildet ist, das in mindestens ein an mindestens einer Längsseite des Messerhalters (3, 16) korrespondierendes Rastelement einrastbar ist.

6. Messereinsatz nach Anspruch 5, **dadurch gekennzeichnet, dass** das Rastelement an der Messerkassette (4, 10) als Rastnut ausgebildet ist und das Rastelement am Messerhalter als Raststeg ausgebildet ist.

7. Messereinsatz nach Anspruch 5, **dadurch gekennzeichnet, dass** das Rastelement an der Messerkassette (4, 10) als Raststeg ausgebildet ist und das Rastelement am Messerhalter als Rastnut ausgebildet ist.

8. Messereinsatz nach Anspruch 5, **dadurch gekennzeichnet, dass** das Rastelement an der Messerkassette (4, 10) und am Messerhalter (3, 16) als Schlitz (17, 18, 24, 25) ausgebildet ist, in den eine Ausstülpung (28, 29) einer in der Messerkassette (4, 10) gelagerte Drahtfeder (21, 22) eingreift.

9. Messereinsatz nach einem der vorstehenden Ansprüche, **dadurch gekennzeichnet, dass** jeder der Messerhalter (3, 16) drehbar an der Zugstange (9) gehaltert ist.

10. Messereinsatz nach einem der vorstehenden Ansprüche, **dadurch gekennzeichnet, dass** zwischen den beiden Messerhaltern (3, 16) eine Feder (11) angeordnet ist.

11. Messereinsatz nach einem der vorstehenden Ansprüche, **dadurch gekennzeichnet, dass** die Feder (11) eine Schenkelfeder ist.

12. Abisolierzange (1) mit zwei Handhebeln (13), einer Gehäuseschale (8) und einer relativ zu dieser schwenkbaren Klemmbacke, die mit dem als Klemmbacke (7) ausgebildeten vorderen Teil der Gehäuseschale (8) ein Zangenmaul bildet, in welchem ein Messereinsatz (2) gelagert ist, **dadurch gekennzeichnet, dass** der Messereinsatz (2) gemäß einem der vorstehenden Ansprüche ausgebildet ist.

## Claims

1. A knife insert of a stripping tool, comprising at least one knife support (3, 16) mounted in the pliers mouth of the stripping tool and a stripping knife (5, 15), wherein the knife support (3, 16) is movably mounted by a pull rod (9), wherein the knife insert (2) comprises at least one knife cassette (4, 10) which is removably fixed to the knife support (3, 16) and in which the stripping knife (5, 15) is mounted.

2. A knife insert according to claim 1, **characterized in that** the knife cassette (4, 10) is removably latched onto the knife support (3, 16).

3. A knife insert according to claim 1 or 2, **characterized in that** the knife insert (2) comprises two knife supports (3, 16) which are movable relative to each other and comprise a knife cassette (4, 10) each which is removably latched thereon.

4. A knife insert according to one of the preceding claims, **characterized in that** at least one of the stripping knives (5, 15) is formed by several adjacently arranged knife fins.

5. A knife insert according to one of the preceding claims, **characterized in that** at least one of the longitudinal sides of the knife cassette (4, 10) is formed with at least one latching element, which can be latched into at least one latching element corresponding on at least one side of the knife support (3, 16).

6. A knife insert according to claim 5, **characterized in that** the latching element is formed as a latching groove on the knife cassette (4, 10) and the latching element is formed on the knife support as a latching web.

7. A knife insert according to claim 5, **characterized in that** the latching element is formed as a latching web on the knife cassette (4, 10) and the latching element is formed on the knife support as a latching groove.

8. A knife insert according to claim 5, **characterized in that** the latching element is formed as a slot on the knife cassette (4, 10) and on the knife support (3, 16), into which a protrusion (28, 29) of a wire spring (21, 22) engages which is mounted in the knife cassette (4, 10).

9. A knife insert according to one of the preceding claims, **characterized in that** each of the knife supports (3, 16) is rotatably retained on the pull rod (9).

10. A knife insert according to one of the preceding claims, **characterized in that** a spring (11) is arranged between the two knife supports (3, 16).

11. A knife insert according to one of the preceding claims, **characterized in that** the spring (11) is a leg spring.

12. Stripping pliers (1) with two hand levers (13), a housing shell (8) and a clamping jaw which is pivotable relative thereto, which forms a pliers mouth with the front part of the housing shell (8) formed as a clamping jaw (7), in which a knife insert (2) is mounted, **characterized in that** the knife insert (2) is formed according to one of the preceding claims.

## Revendications

1. Insert de lame d'un outil à dénuder, présentant au moins un porte-lame (3, 16) supporté dans un bec de pince de l'outil à dénuder et une lame à dénuder (5, 15), dans lequel le porte-lame (3, 16) est retenu de façon mobile par une tige de traction (9), l'insert de lame (2) présentant au moins une cassette de lame (4, 10) fixée de façon amovible au porte-lame (3, 16) et dans laquelle la lame à dénuder (5, 15) est supportée.

2. Insert de lame selon la revendication 1, **caractérisé en ce que** la cassette de lame (4, 10) est engagée de façon amovible sur le porte-lame (3, 16).

3. Insert de lame selon la revendication 1 ou 2, **caractérisé en ce que** l'insert de lame (2) présente deux porte-lames (3, 16) mobiles l'un par rapport à l'autre, présentant chacun une cassette de lame (4, 10) engagée dessus.

4. Insert de lame selon l'une des revendications précédentes, **caractérisé en ce qu'**au moins une des lames à dénuder (5, 15) se compose de plusieurs lamelles disposées les unes à côté des autres.

5. Insert de lame selon l'une des revendications précédentes, **caractérisé en ce qu'**au moins un des côtés longitudinaux de la cassette de lame (4, 10) est muni d'au moins un élément d'engagement qui peut être engagé dans au moins un élément d'engagement correspondant sur au moins un côté longitudinal du porte-lames (3, 16).

6. Insert de lame selon la revendication 5, **caractérisé en ce que** l'élément d'engagement de la cassette de lame (4, 10) est conformé comme une gorge d'engagement et l'élément d'engagement du porte-lame comme une barrette d'engagement.

7. Insert de lame selon la revendication 5, **caractérisé en ce que** l'élément d'engagement de la cassette de lame (4, 10) est conformé comme une barrette d'engagement et l'élément d'engagement du porte-lame comme une gorge d'engagement.

8. Insert de lame selon la revendication 5, **caractérisé en ce que** les éléments d'engagement de la cassette de lame (4, 10) et du porte-lame (3, 16) sont conformés comme une fente (17, 18, 24, 25) dans laquelle se met en prise un évasement (28, 29) d'un ressort à boudin (21, 22) supporté dans la cassette de lame (4, 10).

9. Insert de lame selon l'une des revendications précédentes, **caractérisé en ce que** chacun des porte-lames (3, 16) est retenu avec possibilité de rotation sur la tige de traction (9).

10. Insert de lame selon l'une des revendications précédentes, **caractérisé en ce qu'**un ressort (11) est disposé entre les deux porte-lames (3, 16).

11. Insert de lame selon l'une des revendications précédentes, **caractérisé en ce que** le ressort (11) est un ressort à branches.

12. Pince à dénuder (1) avec deux leviers à main (13), une coque de logement (8) et un mors de serrage pouvant pivoter par rapport à celle-ci, qui forme avec la partie antérieure de la coque de logement (8) conformée comme un mors de serrage (7) un bec de pince dans lequel un insert de lame (2) est supporté, **caractérisée en ce que** l'insert de lame (2) est conformé selon l'une des revendications précédentes.
